# EUROPEAN PATENT APPLICATION

(11) **EP 2 787 659 A1**
(43) Date of publication of application: **08.10.2014**
(21) Application number: 12852914.6
(22) Date of filing: 18.01.2012
(51) Int. Cl.: H04B 10/2507, H04J 14/02

(54) **APPARATUS FOR SUPPRESSING NOISE IN INJECTION-LOCKED LIGHT SOURCE AND WDM-PON SYSTEM PROVIDED WITH SAME**

(30) Priority: 30.11.2011 KR 20110126586
(71) Applicant: Korea Advanced Institute of Science and Technology, Daejeon 305-338 (KR)
(72) Inventor: LEE, Chang-Hee, Daejeon305-701 (KR); MUN, Sang-Rok, Mokpo-si Jeollanam-do 530-380 (KR); YOO, Sang-Hwa, Gumi-si Gyeongbuk 730-799 (KR); KIM, Joon-Young, Gwangju 502-738 (KR); SEO, Byungil, Daegu 703-772 (KR); KYE, Myeonggyun, Seoul 135-800 (KR)
(74) Representative: Fenix Legal KB
(86) International application number: PCT/KR2012/000450
(87) International publication number: WO 2013/081240

(57) **Abstract**

A WDM-PON system configured to perform an asymmetric wavelength division multiplexing and demultiplexing is proposed. A receiving end of WDM-PON system configured to receive a light transmitted from a transmission end including a first wavelength division multiplexer/demultiplexer includes a second wavelength division multiplexer/demultiplexer configured to demultiplex the light received rom the transmission end, where the second bandwidth of wavelength division multiplexer/demultiplexer is substantially greater than that of the first wavelength division multiplexer/demultiplexer.

## Description

### BACKGROUND OF THE DISCLOSURE

### FIELD

The teachings in accordance with the exemplary embodiments of this present disclosure generally relate to a noise suppression apparatus, and more particularly to a noise suppression apparatus used in a transceiver of a WDM-PON (Wavelength Division Multiplexed-Passive Optical Network) system, and a WDM-PON system having the noise suppression apparatus.

### BACKGROUND

Generally, a dense WDM-PON (Wavelength Division Multiplexing-Passive Optical Network) may be well understood as a next generation optical network. In WDM-PON technology, an optical transmission module may need to be non-wavelength dependent despite using a plurality of optical wavelengths. Thus, the WDM-PON system (technology) is perceived to be an ultimate alternative to cope with explosively increased data traffic because the WDM-PON system can satisfy an explosively high demand on a wider bandwidth in an access network and is excellent in security.

One of the embodying methods for WDM-PON system is an injection seeded WDM-PON technology. This method has attracted considerable attention as a favorite solution of WDM-PON due to advantages in Giga-byte transmissibility and cost efficiency. However, this method suffers from difficulty in high Giga-byte transmission due to influence by noise of injection-seeded light source.

In relation thereto, a noise-reducing method using non-linear effect occurring in semiconductors or optical fibers has been proposed. However, the non-linear effect also suffers from disadvantages that require high-cost for high output light source and management cost due to requirement of light power exceeding a predetermined level for non-linear effect.

Thus, a method is demanded capable of effectively and economically reducing noise while a required light power level is low.

### SUMMARY

Therefore, the present disclosure has been made to solve the foregoing disadvantages/problems of the prior art and therefore an object of the disclosure is to provide a noise suppression apparatus for injection seeded light source configured to suppress noise of seeded light generated from a light source in a feed forward method, and a wavelength division multiplexed-passive optical network (WDM-PON) system having the noise suppression apparatus.

The present disclosure has been made to solve the foregoing disadvantages/problems of the prior art and therefore another object of the disclosure is to provide a noise suppression apparatus for injection seeded light source configured to amplify a high frequency bandwidth of a light source and to suppress noise of seeded light generated from the light source in a feed forward method, and a WDM-PON system having the noise suppression apparatus.

In one general aspect of the present invention, there is provided a noise suppression apparatus for injection seeded light source in an optical transmitter configured to receive an injection light from an injection light source, the apparatus comprising: an optical coupler configured to receive and split the injection light; a converter configured to convert an optical signal from the optical coupler to an electrical signal; an inverter configured to invert a phase of the electrical signal; and a driving unit configured to receive the phase-inverted electrical signal from the inverter and to provide a driving current which drives the light source.

In some exemplary embodiment of the present invention, the light source may include a reflective light source.

In some exemplary embodiment of the present invention, the light source may include a non-reflective light source.

In some exemplary embodiment of the present invention, the apparatus may further comprise an amplifier connected between the inverter and the driving unit and configured to adjust the intensity of the phase-inverted electrical signal.

In some exemplary embodiment of the present invention, the apparatus may further comprise an optical delayer connected between the optical coupler and the light source and configured to offset a time loss.

In some exemplary embodiment of the present invention, the driving unit may be further configured to allow the driving current to grow smaller when the injection light increases, and to allow the driving current to grow larger when the injection light decreases.

In some exemplary embodiment of the present invention, the apparatus may further comprise a polarization adjuster configured to allow a polarization of the injection light and that of a light outputted from the light source to match.

In some exemplary embodiment of the present invention, the polarization adjuster may include a polarization splitter and a polarization controller.

In some exemplary embodiment of the present invention, the polarization adjuster may include a polarization controller.

In another general aspect of the present disclosure, there may be provided a noise suppression apparatus for injection seeded light source in an optical transmitter configured to receive an injection light from an injection light source, the apparatus comprising: an optical coupler configured to receive and split the injection light; a converter configured to convert an optical signal from the optical coupler to an electrical signal: an inverter configured to invert a phase of the electrical signal; an offset unit configured to amplify a high frequency bandwidth of the electrical signal; and a driving unit configured to: receive the phase-inverted electrical signal, generate a driving current which drives the light source by using the signal amplified in high frequency bandwidth by the offset unit, and provide the driving current to the light source.

In some exemplary embodiment of the present invention, the light source may include a reflective light source.

In some exemplary embodiment of the present invention, the light source may include a non-reflective light source.

In some exemplary embodiment of the present invention, the apparatus may further comprise an amplifier connected between the inverter and the driving unit and configured to adjust the intensity of the phase-inverted electrical signal.

In some exemplary embodiment of the present invention, the apparatus may further comprise an optical delayer connected between the optical coupler and the light source and configured to offset a time loss.

In some exemplary embodiment of the present invention, the offset unit may be configured to amplify a signal over a 3 to 4 GHz.

In some exemplary embodiment of the present invention, the driving unit may be further configured to allow the driving current to grow smaller when the injection light increases, and to allow the driving current to grow larger when the injection light decreases.

In some exemplary embodiment of the present invention, the offset unit may be further configured to amplify a data modulated by the driving unit.

### ADVANTAGEOUS EFFECTS

In an advantageous effect, the present disclosure can promote economy of decreasing an external injection light power in an injection seeded light source-based WDM-PON by adopting a feed forward noise suppression method configured to operate at a low optical power.

In another advantageous effect, the present disclosure can enhance transmission speed and quality of an optical communication network by reducing noise using a feed forward method.

In still another advantageous effect, the present disclosure can accomplish an easy upgrade from an existing optical communication network by replacing an optical transmission end module because the noise reducing process is performed at an optical communication end.

In still further advantageous effect, the present disclosure can effectively transmit a signal of high frequency bandwidth noiselessly in a wavelength locked light source-based WDM-PON system by adopting a low optical power operable feed forward method by offsetting bandwidth loss limited to a light source and transmitting a signal of high frequency bandwidth.

### BRIEF DESCRIPTION OF THE DRAWINGS

FIG. 1 is a block diagram illustrating a noise suppression apparatus for injection seeded light source according to an exemplary embodiment of the present disclosure;
FIG. 2 is a block diagram illustrating a noise suppression apparatus for injection seeded light source according to another exemplary embodiment of the present disclosure.
FIG. 3 is a graph illustrating RIN (Relative Noise Intensity) of a noise suppression apparatus for injection seeded light source according to an exemplary embodiment of the present disclosure:
FIG. 4 is a block diagram illustrating a noise suppression apparatus for injection seeded light source according to an exemplary embodiment of the present disclosure;
FIGS. 5a and 5b illustrate a spectrum of a signal outputted from a light source according to prior art;
FIGS. 6a and 6b illustrate a spectrum of a signal outputted from a light source according an exemplary embodiment of the present disclosure:
FIG.7 is a block diagram illustrating a WDM-PON system having a noise suppression apparatus for injection seeded light source according to an exemplary embodiment of the present disclosure: and
FIG.8 is a block diagram illustrating a WDM-PON system having a noise suppression apparatus for injection seeded light source according to another exemplary embodiment of the present disclosure.

### DETAILED DESCRIPTION

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Accordingly, the described aspect is intended to embrace all such alterations, modifications, and variations that fall within the scope and novel idea of the present disclosure.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

It will be understood that when an element is referred to as being "connected" or "coupled" to another element, it can be directly connected or coupled to the other elements or intervening elements may be present. In contrast, when an element is referred to as being "directly connected" or "directly coupled" to another element, there are no intervening elements present.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise.

It will be understood that the terms "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. That is, the terms "including", "includes", "having", "has", "with", or variants thereof are used in the detailed description and/or the claims to denote non-exhaustive inclusion in a manner similar to the term "comprising".

Furthermore, "exemplary" is merely meant to mean an example, rather than the best. It is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated. That is, in the drawings, the size and relative sizes of layers, regions and/or other elements may be exaggerated or reduced for clarity.

Now, the present disclosure will be described in detail with reference to the accompanying drawings. Like numbers refer to like elements throughout and explanations that duplicate one another will be omitted.

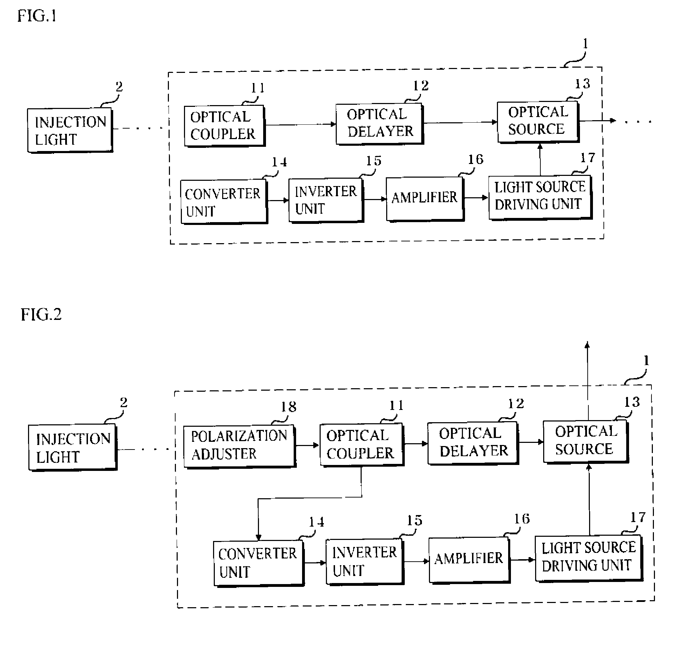

FIG. 1 is a block diagram illustrating a noise suppression apparatus for injection seeded light source according to an exemplary embodiment of the present disclosure.

Referring to FIG. 1, the noise suppression apparatus for injection seeded light source according to an exemplary embodiment of the present disclosure generally applied to an optical transmitter 1 includes an optical coupler 11, an optical delayer 12. a light source 13, a converter 14, an inverter 15, an amplifier 16 and a light source driving unit 17.

The optical transmitter 1 applied to the present disclosure receives a light (hereinafter referred to as an injection light) injected from an injection light source 2 to a light source 13. The optical coupler 11 splits an injection light by receiving the injection light. The converter 14 is connected to the optical coupler 11 to convert a noise of the injection light to an electrical signal. The converter 14 may be a photo diode, for example.

The inverter 15 is connected to the converter 14 to inverse a phase of the noise converted to the electrical signal, and the amplifier 16 is connected to the inverter 15 to adjust intensity of phase-inverted noise and output the intensity -adjusted phase-inverted noise. The light source driving unit 17 is connected to the amplifier 16 to receive the output of the amplifier 16, and provide a current to the light source 13 using the received output, and to modulate the light source 13.

The optical delayer 12 is connected to the optical coupler 11 to offset a time loss generated in the course of electrical processing. The light source 13 is connected to the optical delayer 12 to allow injection of injection light, and is driven by the light source driving unit 17. The light source 13 may be a reflective light source, or a non-reflective light source.

Now, operation of noise suppression apparatus according to the present disclosure will be described in more detail.

An injection light outputted from the injection light source 2 and transmitted to the optical transmitter 1 is split into two lights through the optical coupler 11. Some of the injection light is transmitted to the converter 14. The converter 14 converts a noise of the injection light to an electrical signal by detecting the noise of the injection light. The noise converted to the electrical signal by the converter 14 is converted to a noise of inverted phase, adjusted in intensity by the amplifier 16 and transmitted to the light source driving unit 17.

The light source driving unit 17 receives the noise that is converted to reverse phase, where the noise is combined by a modulation current and a driving current, and outputs the combined noise to the light source 13. The light source driving unit 17 adjusts the driving current in such a manner that the driving current grows smaller when the injection light increases by the intensity of noise and the driving current decreases when the injection light decreases.

Meantime, another output of the optical coupler 11 is injected to the light source 13, where the noise is offset because noises are operated to mutually-offset directions, and a noise of light injected from the light source 13 and a noise transmitted from the light source driving unit 17 are mutually inversely phased.

It should be apparent to the skilled in the art that the noise-suppressed output light of the light source 13 becomes an output light of an optical transmitter (Tx) via the optical coupler when the light source 13 is a reflection type light source, while the light is outputted without being reflected and not via the optical coupler 11, when the light source 13 is a non-reflection type light source.

FIG. 2 is a block diagram illustrating a noise suppression apparatus for injection seeded light source according to another exemplary embodiment of the present disclosure.

Referring to FIG. 2, the noise suppression apparatus for injection seeded light source according to another exemplary embodiment of the present disclosure generally applied to an optical transmitter 1 includes an optical coupler 11, an optical delayer 12, a light source 13, a converter 14, an inverter 15, an amplifier 16, a light source driving unit 17 and a polarization adjuster 18.

The exemplary embodiment of the present disclosure illustrated in FIG.2 further includes a polarization adjuster 18. Description of other elements than the polarization adjuster 18 will be omitted, as other elements than the polarization adjuster 18 have the same functions as those in FIG. 1.

The polarization adjuster 18 receives an injection light from an injection light source 2 to match a polarization state of the injection light to that of a light outputted from a light source 13. The polarization adjuster may include a polarization splitter or may include a polarization controller.

In comparison between the exemplary embodiment of FIG. 1 and the exemplary embodiment of FIG. 2, the exemplary embodiment of FIG.2 intends to offset the polarization state when the polarization state of injection light source 2 and that of the injected seeded light source 13 are different. The injection light outputted from the injection light source 2 is adjusted to be matched to the polarization state of the light source 13 and then inputted to the optical coupler 11. Other operational principles are same as those of FIG. 1.

A part of light including the intensity of noise injected to the optical transmitter from outside in the noise suppression apparatus according to the present disclosure is converted to a current, and then converted to a phase-inverted current and amplified. This current is added to a modulation current of the light source and injected to the light source whereby an optical noise can be economically suppressed.

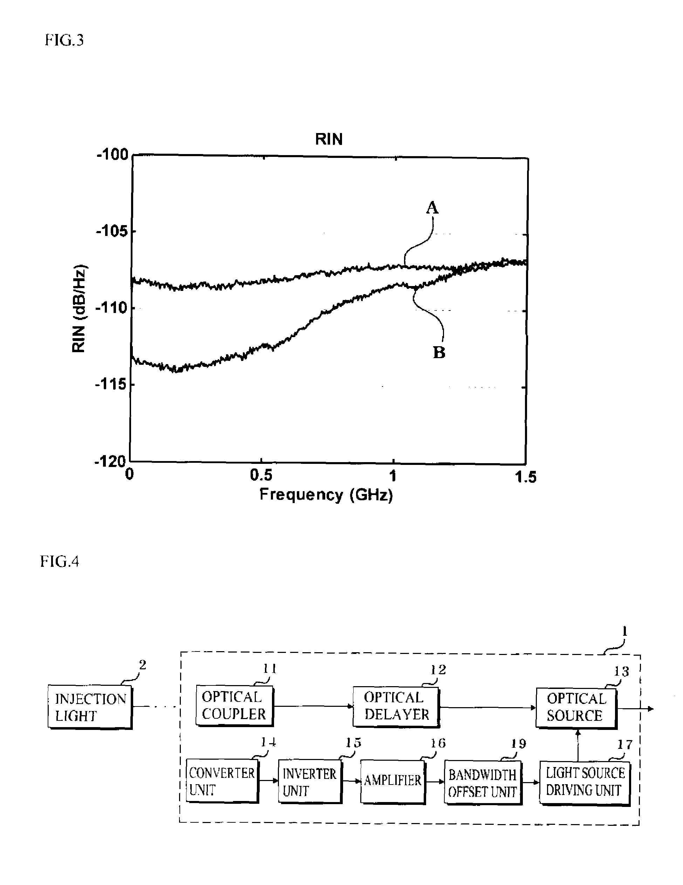

FIG. 3 is a graph illustrating relative intensity of noise (RIN) of a noise suppression apparatus for injection seeded light source according to an exemplary embodiment of the present disclosure, where the RIN indicates distribution of noise for unit intensity of each frequency, and where A defines an RIN prior to application of the noise suppression apparatus according to the present disclosure and B defines an RIN after application of the noise suppression apparatus according to the present disclosure. As illustrated in the graph, it can be noted that the intensity of noise is reduced by the noise suppression apparatus.

FIG. 4 is a block diagram illustrating a noise suppression apparatus for injection seeded light source according to an exemplary embodiment of the present disclosure.

Referring to FIG.4, the noise suppression apparatus for injection seeded light source according to an exemplary embodiment of the present disclosure generally applied to an optical transmitter I includes an optical coupler 11, an optical delayer 12, a light source 13, a converter 14, an inverter 15, an amplifier 16, a bandwidth offset unit 19 and a light source driving unit 17.

The optical transmitter 1 applied to the present disclosure receives a light (hereinafter referred to as an injection light') injected from an injection light source 2 to a light source 13. The optical coupler 11 splits an injection light by receiving the injection light. The converter 14 is connected to the optical coupler 11 to convert a noise of the injection light to an electrical signal. The converter 14 may be a photo diode, for example.

In order to transmit a signal of high Giga bit, the bandwidth offset unit 19 amplifies a high frequency bandwidth of a signal to be provided by the light source driving unit to the light source 13. and offsets loss of high frequency bandwidth caused by limited bandwidth of the light source 13.

A conventionally used reflective semiconductor optical amplifier (RSOA) or a light source such as Fabry-Perot laser diode (F-D LP) is limited in bandwidth to 3∼4GHz. Thus, in order to transmit a signal of more than 3∼4GHz, when the bandwidth offset unit 17 according to the present disclosure amplifies a signal of high frequency bandwidth and transmits the amplified signal, it is possible to offset the loss of high frequency bandwidth. The bandwidth offset unit 19 preferably amplifies a signal of more than 3∼4GHz, for example, in the light source 13, and the bandwidth offset unit 19 may be an equalizer, for example.

Although the exemplary embodiment of the present disclosure has explained the bandwidth offset unit 19 amplifies a signal of the feed forward light source 13, the present disclosure is not limited thereto, it is possible to amplify data modulated by the light source driving unit 17, in addition to the signal of the feed forward light source 13 by being provided into the light source driving unit 17.

The light source driving unit 17 receives a phase-inverted noise from the amplifier 16 and receives a bandwidth-offset signal from the bandwidth offset unit 19, provides a current to the light source 13 using the same and modulates a signal provided to the light source 13.

The optical delayer 12 is connected to the optical coupler 11 to offset a time loss generated in the course of electrical processing. The light source 13 is connected to the optical delayer 12 to allow injection of injection light, and is driven by the light source driving unit 17. The light source 13 is not limited to the exemplary embodiment thus described, and may be a reflective light source, or a non-reflective light source.

Now, an operation of the noise suppression apparatus will be described in more detail of FIG. 4.

An injection light outputted from the injection light source 2 and transmitted to the optical transmitter 1 is split into two lights through the optical coupler 11. A part of the injection light is transmitted to the converter 14. The converter 14 converts a noise of the injection light to an electrical signal by detecting the noise of the injection light. The noise converted to the electrical signal by the converter 14 is converted to a noise of inverted phase by the inverter 15, adjusted in intensity by the amplifier 16 and transmitted to the bandwidth offset unit 19.

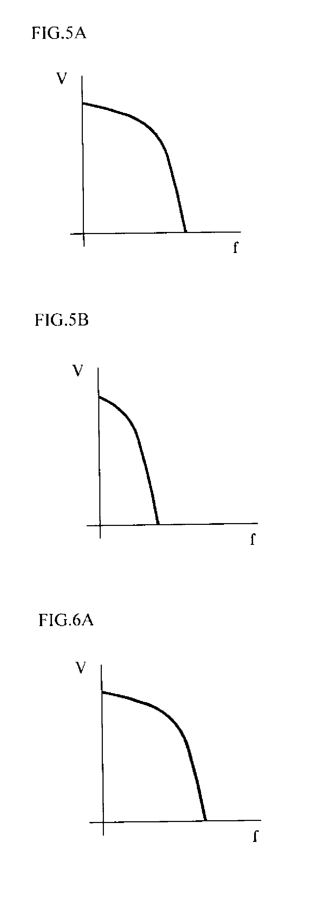

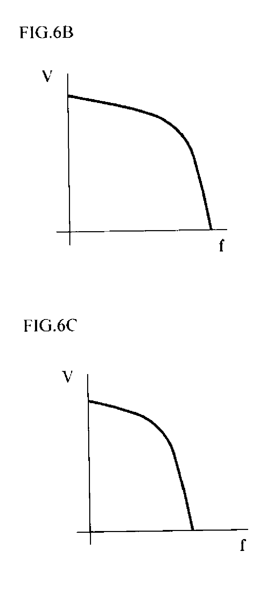

FIGS. 5a and 5b illustrate a spectrum of a signal outputted from a light source according to prior art, and FIGS. 6a and 6b illustrate a spectrum of a signal outputted from a light source according an exemplary embodiment of the present disclosure, where FIGS. 5a and 6a illustrate a spectrum of an electrical signal inputted from the light source.

In the conventional system, an electrical signal inputted from the light source loses a high frequency bandwidth component to be outputted in a biased signal as illustrated in FIG. 5b. However, when the bandwidth offset unit 19 amplifies the high frequency bandwidth to output a signal amplified as shown in FIG. 6a according to the present disclosure and the signal amplified in the high frequency bandwidth by the bandwidth offset unit 19 is provided to the light source 13 through the light source driving unit 17, it can be noted that a signal free from distortion can be outputted.

The light source driving unit 17 receives a phase-inverted noise from the amplifier 16. and receives a high frequency bandwidth-amplified signal from the bandwidth offset unit 19, combines a modulation current generated using the high frequency bandwidth-amplified signal with a driving current, and outputs the combined to the light source 13. The light source driving unit 17 adjusts a driving current in such a manner that the driving current decreases when an injection light increases due to noise, and the driving current increases when the injection light decreases.

Meanwhile, another output of the optical coupler 11 is injected to the light source 13, where the noise is offset because noises are operated to mutually-offset directions, and a noise of light injected from the light source 13 and a noise transmitted from the light source driving unit 17 are mutually inversely phased. Furthermore, because a current injected to the light source 13 is a current amplified in high frequency bandwidth, noise in the high frequency bandwidth can be effectively reduced.

It should be apparent to the skilled in the art that the noise-suppressed output light of the light source 13 becomes an output light of an optical transmitter (Tx) via the optical coupler when the light source 13 is a reflection type light source, while the light is outputted without being reflected and not via the optical coupler 11, when the light source 13 is a non-reflection type light source.

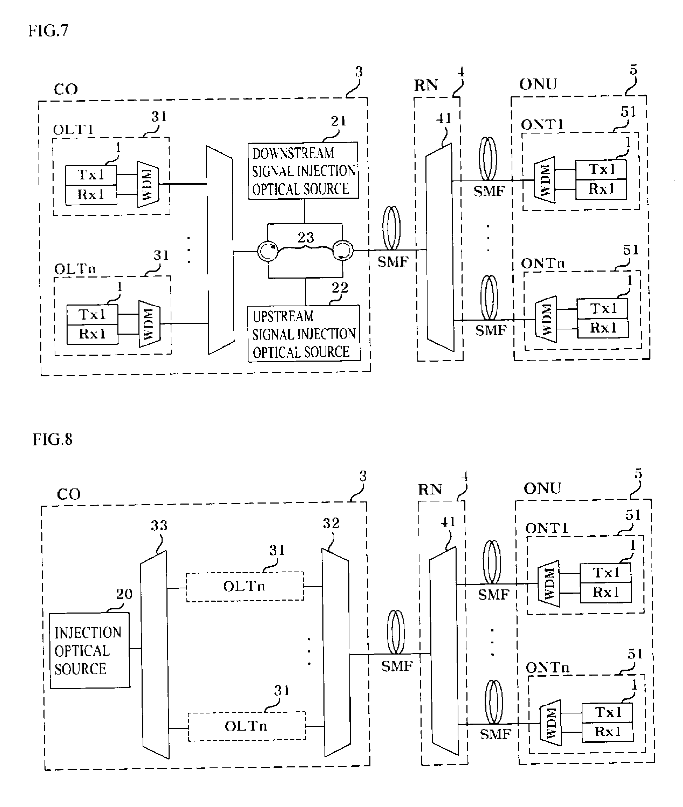

FIG.7 is a block diagram illustrating a WDM-PON system having a noise suppression apparatus for injection seeded light source according to an exemplary embodiment of the present disclosure.

Referring to FIG. 7, the WDM-PON system having a noise suppression apparatus for injection seeded light source according to an exemplary embodiment of the present disclosure includes a central office (CO) 3, a remote node (RN) 4 and optical network unit (ONU) 5.

The CO 3 includes an injection light source 2, where the injection light source 2 is classified into a downstream signal injection light source 21 and an upstream signal injection light source 22. Furthermore, the light source 2 may include a circulator 23.

The circulator 23 is an element having three ports, where a signal inputted to a first port is outputted to a second port, and a signal inputted to the second port is outputted to a third port. Furthermore, the CO 3 includes a plurality of optical line terminals (OLTs) 31 and a first wavelength division multiplexer/demultiplexer 32. The OLT 31 includes optical transmitters 1 having the noise suppression apparatus according to the present disclosure (indicated as 'Tx1'.........'Txn' in FIG. 4) and a wavelength division multiplexer (WDM).

The RN 4 is connected to the CO 3 through a single mode fiber (SMF), and includes a second wavelength division multiplexer/demultiplexer 41 as a router installed in an apartment administration office.

The ONU 5 is connected to the RN 4 via SMF, and includes an optical network terminal (ONT) 51 as a unit provided to each household. The ONT 51 which is an OLT 31 at a user side includes an optical transmitter 1 formed with a noise suppression apparatus according to the present disclosure, an optical receiving end and a WDM. A signal directed to the ONU 5 is a downstream signal and a signal directed to the CO 3 from the ONU 5 is an upstream signal.

Now, operation of the WDM-PON system according to the present disclosure will be described. The system in FIG. 7 is symmetrically configured such that description will be made based on downstream.

A light of broadband spectrum outputted from the downstream injection light source 21 is inputted to a first port of the circulator 23, outputted to a second port and transmitted to the second wavelength division multiplexer/demultiplexer 41 of the RN 40 via SMF. The second wavelength division multiplexer/demultiplexer 41 divides the received light to wavelength of each channel, whereby noise of injection light is greatly increased. Successively, the wavelength-divided light is inputted to WDM of ONT 51. An L band (1565nm ∼ 1625nm) is generally used for the downstream signal. The WDM of ONT 51 transmits a wavelength-different L band light to the optical transmitter 1 and transmits a light of another wavelength to an optical receiver Rx. Thus, the light received by the ONT 51 is injected to the optical transmitter 1 according to the present disclosure.

The injection light injected to the optical transmitter 1 is divided to two by the optical coupler 11. One light is transmitted to the light source 13 and the other light is converted to an electrical signal by the converter 14.

The inverter 15 reverses the phase, and the amplifier 16 adjusts the size of phase-inverted signal. The light source driving unit 17 receives a phase inverted noise to combine the noise with a modulated current and a driving signal, and outputs to the light source 13.

Alternatively, the inverter 15 reverses the phase, and the amplifier 16 adjusts the size of phase-inverted signal. The light source driving unit 17 receives a phase inverted noise to combine a modulated current generated by using noise phase-inverted by the bandwidth offset unit 19 and a driving signal, and outputs to the light source 13.

The light source 13 according to the exemplary embodiment of the present disclosure is actually operated as an optical amplifier. A driving signal and a gain in a light source are substantially proportional, such that the gain decreases when the injection light increases, and the gain increases when the injection light decreases. Thus, it is possible to smooth an output light after passing through the light source 13.

Thereafter, the light suppressed in noise by passing through the reflective light source 13 of the optical transmitter 1 is transmitted to the SMF by the second wavelength division multiplexer/demultiplexer 41 via the WDM of the ONT 51, and transmitted to the receiver Rx via the first wavelength division multiplexer/demultiplexer 32.

FIG.8 is a block diagram illustrating a WDM-PON system having a noise suppression apparatus for injection seeded light source according to another exemplary embodiment of the present disclosure.

The WDM-PON system of FIG. 5 is different from the WDM-PON of FIG. 4 in terms of position of light source 20, but the principle is same as that of WDM-PON system according to the exemplary embodiment of FIG. 4.

A third wavelength division multiplexer/demultiplexer 33 divides the light outputted from a multiple wavelength injection light source 20 and provides the divided light to the OTL 31. Based on the downstream signal, the light outputted from the injection light source 20 is divided by the third wavelength division multiplexer/demultiplexer 33 to be injected to the optical transmitter 1 of the OLT 31, and received by the optical receiver Rx of the ONT 51 via the first wavelength division multiplexer/demultiplexer 32. the SMF and the second wavelength division multiplexer/demultiplexer 41. Other descriptions are omitted because description is same as those in FIG. 7.

The previous description of the present disclosure is provided to enable any person skilled in the art to make or use the inventive disclosure. Various modifications to the disclosure will be readily apparent to those skilled in the art, and the generic principles defined herein may be applied to other variations without departing from the spirit or scope of the disclosure. Thus, the present disclosure is not intended to limit the examples described herein, but is to be accorded the widest scope consistent with the principles and novel features disclosed herein.

## Claims

1. A noise suppression apparatus for injection seeded light source in an optical transmitter configured to receive an injection light from an injection light source, the apparatus comprising:
an optical coupler configured to receive and split the injection light;
a converter configured to convert an optical signal from the optical coupler to an electrical signal;
an inverter configured to invert a phase of the electrical signal; and
a driving unit configured to receive the phase-inverted electrical signal from the inverter and to provide a driving current which drives the light source.

2. The apparatus of claim 1, wherein the light source includes a reflective light source.

3. The apparatus of claim 1, wherein the light source includes a non-reflective light source.

4. The apparatus of claim 1, further comprising:
an amplifier connected between the inverter and the driving unit and configured to adjust the intensity of the phase-inverted electrical signal.

5. The apparatus of claim 1, further comprising:
an optical delayer connected between the optical coupler and the light source and configured to offset a time loss.

6. The apparatus of claim 1, wherein the driving unit is further configured to allow the driving current to grow smaller when the injection light increases, and to allow the driving current to grow larger when the injection light decreases.

7. The apparatus of claim 1, further comprising:
a polarization adjuster configured to allow a polarization of the injection light and that of a light outputted from the light source to match.

8. The apparatus of claim 7, wherein the polarization adjuster includes a polarization splitter and a polarization controller.

9. The apparatus of claim 7, wherein the polarization adjuster includes a polarization controller.

10. A WDM-PON system having a noise suppression apparatus of claims 1.

11. A noise suppression apparatus for injection seeded light source in an optical transmitter configured to receive an injection light from an injection light source, the apparatus comprising:
an optical coupler configured to receive and split the injection light;
a converter configured to convert an optical signal from the optical coupler to an electrical signal;
an inverter configured to invert a phase of the electrical signal;
an offset unit configured to amplify a high frequency bandwidth of the electrical signal: and
a driving unit configured to:
receive the phase-inverted electrical signal,
generate a driving current which drives the light source by using the signal amplified in high frequency bandwidth by the offset unit, and
provide the driving current to the light source.

12. The apparatus of claim 11. wherein the light source includes a reflective light source.

13. The apparatus of claim 11. wherein the light source includes a non-reflective light source.

14. The apparatus of claim 11, further comprising:
an amplifier connected between the inverter and the driving unit and configured to adjust the intensity of the phase-inverted electrical signal.

15. The apparatus of claim 11, further comprising:
an optical delayer connected between the optical coupler and the light source and configured to offset a time loss.

16. The apparatus of claim 11. wherein the offset unit is configured to amplify a signal over a 3 to 4 GHz.

17. The apparatus of claim 11, wherein the driving unit is further configured to allow the driving current to grow smaller when the injection light increases, and to allow the driving current to grow larger when the injection light decreases.

18. The apparatus of claim 11. wherein the offset unit is further configured to amplify a data modulated by the driving unit.

19. A WDM-PON system including a transmitter having a noise suppression apparatus of claim of 11.
